(19) Europäisches Patentamt / European Patent Office / Office européen des brevets

(11) **EP 4 748 806 A1**

(12) **DEMANDE DE BREVET EUROPEEN**

(43) Date de publication:
27.05.2026 Bulletin 2026/22

(21) Numéro de dépôt: 25216078.3

(22) Date de dépôt: 14.11.2025

(51) Classification Internationale des Brevets (IPC):
*C03C 1/00* (2006.01)    *C03C 3/064* (2006.01)
*C03C 3/087* (2006.01)    *C03C 3/091* (2006.01)
*C03C 3/097* (2006.01)    *C03C 13/04* (2006.01)

(52) Classification Coopérative des Brevets (CPC):
C03C 3/087; C03C 1/00; C03C 1/002; C03C 3/064;
C03C 3/091; C03C 3/097; C03C 13/045

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 20.11.2024 FR 2412690

(71) Demandeur: **Saint-Gobain Isover**
**92400 Courbevoie (FR)**

(72) Inventeur: **BARBA ROSSA, Guillaume**
**92400 COURBEVOIE (FR)**

(74) Mandataire: **Saint-Gobain Recherche**
**41 Quai Lucien Lefranc**
**93300 Aubervilliers (FR)**

(54) **COMPOSITION DE VERRE POUR FIBRES D'ISOLATION ET PROCEDE DE FIBRAGE POUR L'OBTENTION DE TELLES FIBRES**

(57) Composition de verre pour fibre d'isolation comprenant, en pourcentages massiques:
$SiO_2$ : entre 62,0% et 65,0%,
$Na_2O$: entre 14,0 et 15,5%,
$CaO$: entre 6,0 et 9,0%,
$MgO$ : entre 1,5 et 4,0%,
$B_2O_3$ : entre 5,5 et 7,5%,
$Al_2O_3$ : entre 1,5 et 2,5%,
$K_2O$ : entre 0 et 2,0%,
autre (s) oxyde (s) : entre 0 et 5,0 % poids en cumulé, de préférence entre 0 et 2,0% en cumulé,
dans lequel le ratio $Na_2O/B_2O_3$ est compris entre 1,90 et 2,80.
Fibres d'isolation obtenues à partir de ladite composition et procédé de fabrication de telles fibres.

**Description**

L'invention concerne le domaine de la production de laine minérale isolante, en particulier de la laine de verre. L'invention concerne plus particulièrement une optimisation de la formulation de la composition du verre final et du mélange de matières premières (ou recette) utilisée pour une telle production, dans le but d'en conserver les propriétés essentielles en permettant l'utilisation massive de matières recyclées, en particulier du calcin de verre flotté, de verre borosilicaté ou encore de verre d'emballage (bouteille).

L'invention concerne le domaine de la fusion d'un mélange de matières premières, en particulier pour la fabrication d'une laine de verre telle qu'utilisée notamment dans le domaine de l'isolation thermique et/ou acoustique des bâtiments ou autres.

Actuellement, le carbonate de sodium (souvent appelé soda ash dans la littérature) est massivement utilisé comme vecteur de sodium (= matière première apportant l'élément sodium dans la matrice finale du verre) pour la production de fibre de verre pour l'isolation. Il existe actuellement pour les producteurs de laine de verre une volonté de réduire la quantité de carbonate de sodium nécessaire à la production de verre, voire d'en supprimer l'apport, en particulier dans le domaine de la production de verre d'isolation pour différentes raisons :

- Le carbonate de soude est très hygroscopique : tout lot contenant, même une petite fraction de carbonate de soude, a tendance à se figer dans les silos de stockage temporaire, ce qui entraîne des problèmes de processus et des procédures de nettoyage risquées.

- Le carbonate de soude contribue fortement aux émissions de gaz à effet de serre ($CO_2$).

En particulier, selon un premier inconvénient majeur, lors de la fusion d'une composition de verre ainsi constituée, les carbonates produisent du $CO_2$ en réagissant dans le verre avec l'apparition d'un phénomène de bullage. En outre l'extraction, la production et/ou le transport du carbonate de soude génèrent d'importantes émissions de $CO_2$. Enfin, le marché de la soude peut être tendu et les prix du carbonate de sodium peuvent être relativement élevés et volatils.

Selon un premier aspect, la présente invention permet de minimiser l'utilisation du carbonate de sodium, voire de l'éliminer dans une recette de verre comprenant un mélange de matières premières pour la fabrication de laine de verre, tout en conservant les principales propriétés du verre nécessaires à l'isolation de ladite laine de verre.

Un moyen avantageux de minimiser la teneur en carbonates, en particulier de sodium, d'une telle recette consiste selon l'invention à augmenter la part des matériaux recyclés (calcin de verre flotté, calcin de bouteille, verre borosilicatés, déchets de la production de laine minérale et en particulier de laine de verre). Cependant, les matrices de verre du calcin flotté (c'est-à-dire issue du recyclage de verre plat utilisé dans le domaine du bâtiment) et du calcin bouteille ou encore des verres borosilicatés, diffèrent considérablement de la chimie du verre d'isolation. Ce dernier présente par exemple une plus faible teneur en silice, et il existe donc une limite supérieure à la part de ces calcins qui peut être utilisée dans la recette.

On donne ci-après dans le tableau 1 des compositions communes de calcin de verre plat et de verre bouteille :

[Tableau 1]

| Eléments | Calcin verre flotté | Calcin verre bouteille |
|---|---|---|
| $SiO_2$ | 72,0 | 71,4 |
| CaO | 8,8 | 10,4 |
| $B_2O_3$ | - | - |
| $Na_2O$ | 13,7 | 12,5 |
| MgO | 3,6 | 1,5 |
| $Al_2O_3$ | 0,7 | 1,9 |
| $Fe_2O_3$ | 0,5 | 0,5 |
| $K_2O$ | 0,2 | 0,6 |
| Autres oxydes | reste | reste |

Si on considère que la teneur en silice du verre flotté et du verre d'emballage est de l'ordre de 72 % poids en moyenne, et que la teneur en silice de la laine de verre d'isolation est de l'ordre de 64 % poids, on peut approximer une limite théorique supérieure de 64/72=89 % pour l'utilisation de calcin de verre plat dans la recette de fabrication d'une laine de verre typique. Pour d'autres raisons, comme la présence de silice dans les matières premières nécessaires à la production de verre isolant (feldspath, agents oxydants), une limite haute peut être fixée à 85 % poids.

Avec une telle quantité de calcin, la recette du verre isolant est par ailleurs avantageusement exempte de sable (qui est une ressource en tension), voire de supports de calcium et de magnésium susceptibles d'être carbonatés.

Un autre objet de la présente invention est ainsi de proposer une composition de verre pour fibres minérales d'isolation adaptée pour permettre l'utilisation d'une quantité maximale de calcin de verre plat ou d'emballage (bouteille).

La composition du verre utilisé comme isolant dans la laine de verre actuelle présente généralement une teneur plus élevée en alumine, en bore et en sodium que le verre flotté et le verre d'emballage. Par conséquent, outre les matériaux recyclés, la fraction restante du lot (matières premières, naturelles ou synthétiques) peut apporter d'autres éléments clés pour la production de laine de verre en particulier :

- de l'aluminium (par exemple introduits comme matière première sous forme de feldspath, néphéline, phonolite etc.)

- du bore (par exemple introduits comme matière première sous forme d'hydrates de borax, d'acide borique, de kernite etc.)

- éventuellement de sodium sous forme non carbonatée (soude NaOH, silicates de sodium, nitrate de sodium, sulfate de sodium...).

Si les vecteurs d'alumine et de bore sont généralement exempts de carbonate, ce n'est pas le cas du vecteur de sodium. Certaines études proposent d'échanger le carbonate de soude avec des matériaux sans carbonate chargés en sodium comme le nitrate de sodium ou le sulfate de sodium mentionnés ci-dessus. Ces matériaux présentent plusieurs inconvénients comme des risques liés à leur propriétés (hygroscopie, corrosion, explosivité), l'émanation de gaz et de polluants (NOx, SOx). En outre une telle utilisation peut nécessiter un changement radical de l'équipement de traitement, des technologies de mélange, de transport et/ou de fusion. Ces matériaux alternatifs doivent donc être minimisés dans la recette.

On décrit ci-après les propriétés fondamentales utilisées pour les compositions de verre fondues utiles pour le fibrage de fibre de verre :

- la température correspondant à une viscosité de 1000 poises, notée «$T_{log3}$» et exprimée en degrés Celsius, correspondant à la température typique de fibrage,
- la température de liquidus, notée « $T_{liq}$ » ou Tliquidus, correspondant à la température en-dessous de laquelle peuvent se former les premiers cristaux.

Il est important, pour la bonne mise en œuvre du procédé de fibrage de limiter la température de liquidus $T_{liq}$ du verre élaboré, pour ne pas avoir à augmenter les températures du verre fondu dans les assiettes de fibrage, de façon à éviter la présence de cristaux qui perturbent la mise en forme du verre. Une augmentation du $T_{liq}$ se traduit en particulier par des coûts supplémentaires en énergie, et diminue la durée de vie des assiettes utilisées pour le fibrage ou/et la qualité du produit final. Également, si la température du verre passe en dessous de la $T_{liq}$ lors de son cheminement dans les outils de fibrage, en particulier dans l'assiette percée il existe un risque de bouchage des trous calibrés de cette pièce à cause de la cristallisation.

En outre, la marge de formage, c'est-à-dire de fabrication par étirement des fibres, peut être effectuée dans une gamme de températures correspondant à la différence entre $T_{log3}$ et $T_{liq}$, notée « $\Delta T$ » et exprimée en degrés Celsius. Plus cet écart est important, plus le procédé de fibrage peut être effectué dans des conditions évitant les inconvénients précités.

L'utilisation de calcin en grande quantité pour la fabrication de fibres de verre pour l'isolation, en particulier pour plus de 60%, ou même plus de 70%, voire plus de 75% ou même plus de 80% de la masse du verre fondu (hors calcin interne recyclé) permettant ladite fabrication est l'objet de la présente invention.

L'objet de la présente invention est en particulier de fournir une composition de verre et un procédé associé qui permettent d'utiliser une très grande quantité de calcin sans risquer des problèmes de bouchage des instruments de fibrage par cristallisation précoce du verre fondu dans ces derniers si la $T_{liq}$ est trop élevée et/ou si la marge de formage est trop étroite.

Cette utilisation a été rendue possible selon l'invention en adaptant la composition du verre cible de façon à introduire dans le bain de fusion du calcin en grande quantité.

Selon l'invention, il a été trouvé qu'il était possible de maintenir la température de liquidus d'un mélange de matières premières très riche en calcin riche en silice à des températures inférieures ou égales à 920°C et une marge de formage supérieure à 120°C en adaptant spécifiquement la composition du verre fondu et en sélectionnant dans le mélange vitrifiable les matières premières dans la liste décrite par la suite.

Ainsi, l'invention propose une optimisation de la teneur finale en oxydes du verre, tout en maintenant les propriétés du verre, ainsi qu'une méthode de sélection des matières premières qui permet de minimiser ou d'éviter l'utilisation de carbonate de sodium ou, plus généralement, de supports sodiques carbonatés dans la recette.

La fraction de masse de $Na_2O$ apportée par un porteur de sodium dans la matrice de verre peut être calculée selon la formule qui suit :

$$f = \frac{m_{porteur}}{m_{verre}} \times f_{Na_2O}$$

avec $m_{porteur}$ la masse de porteur dans la recette pour produire une masse $m_{verre}$ de verre et $f_{Na2O}$ la fraction massique de $Na_2O$ dans le porteur considéré. La fraction massique de $Na_2O$ apportée par tous les supports de sodium est la somme de toutes les fractions massiques de $Na_2O$ apportées par chaque support de sodium.

L'objet de la présente invention est en particulier de fournir une composition de verre utilisable comme fibre d'isolation et dont la fabrication peut être assurée en utilisant comme matière première plus de 70% poids de calcin de verre comprenant plus de 70% massique de $SiO_2$ et de préférence sans besoin de carbonate(s), en particulier sans carbonate de sodium.

Plus précisément, selon un premier objet, la présente invention porte sur une composition de verre pour fibre d'isolation et ladite fibre de verre répondant à la composition suivante :

$SiO_2$ : entre 62,0% et 65,0%,

$Na_2O$ : entre 14,0 et 16,0%, de préférence entre 14,0 et 15,5%

CaO : entre 6,0 et 9,0%,

MgO : entre 1,5 et 4,0%,

$B_2O_3$ : entre 5,5 et 7,5%,

$Al_2O_3$ : entre 1,5 et 2,5%,

$K_2O$ : entre 0 et 2,0%,

autre (s) oxyde (s): entre 0 et 5,0 % poids en cumulé et dans lequel le ratio $Na_2O/B_2O_3$ est compris entre 1,90 et 2,80.

Selon d'autres modes de réalisation avantageux de la composition selon présente invention, qui peuvent le cas échéant être combinés entre eux :

- Le ratio $Na_2O/B_2O_3$ est compris entre 2,10 et 2,50, de préférence entre 2,10 et 2,40, de préférence encore entre 2,10 et 2,30.
- Le pourcentage massique en $Na_2O$ est compris entre 14,5 et 15,5%.
- Le pourcentage massique en $B_2O_3$ est compris entre 6,5 et 8,0%, de préférence encore entre 6,7 et 7,5%.
- Le pourcentage massique en $Al_2O_3$ est compris entre 1,6 et 2,0%.
- Le pourcentage massique en $SiO_2$ est compris entre 63,0 et 64,0%.
- Le pourcentage massique en MgO est compris entre 2,5 et 3,5%.
- Le pourcentage massique en CaO est compris entre 8,0 et 9,0%.
- La composition de verre présente une valeur $T_{log3}$ comprise entre 1030 et 1080 °C, $T_{log3}$ étant la température correspondant à une viscosité de $10^3$ poises de la composition fondue.
- La composition de verre présente une valeur $T_{liq}$ inférieure à 925°C, de préférence inférieure à 920°C, $T_{liq}$ étant la température en dessous de laquelle se forment les premiers cristaux lors du refroidissement de la composition fondue.
- La composition de verre présente une différence $\Delta T$ entre ses valeurs $T_{log3}$ et $T_{liq}$ supérieure à 100°C, de préférence supérieure à 110°C.

L'invention porte également sur les fibres de verre répondant à la composition précédente et obtenues par sa fusion et son fibrage, ainsi que sur le matelas de fibres de verre comprenant un ensemble de telles fibres de verre, liées par un liant organique ou inorganique.

Également, la présente invention porte sur un procédé de fabrication desdites fibres de verre de ladite composition, ledit procédé comprenant la fusion d'un mélange de matières premières constituant un bain de fusion et le fibrage dudit mélange fondu, procédé dans lequel ledit bain de fusion comprend :

- du calcin de verre comprenant un pourcentage poids de silice supérieur à 70%, de préférence supérieur à 71%,
- au moins une source d'aluminium
- au moins une source de bore,
- optionnellement au moins une source de magnésium
- optionnellement au moins une source de sodium choisie de préférence parmi l'hydroxyde de sodium NaOH ou le silicate de sodium, le nitrate de sodium ou leur mélange ;
- optionnellement au moins une source de calcium,
- optionnellement des sources d'au moins un élément choisi parmi le phosphore P, le manganèse Mn, le fer Fe, le fluor F, ledit procédé dans lequel ledit calcin de verre représente, en masse, plus de 70%, de préférence plus de 75%, du verre fondu obtenu à partir du mélange de matières premières constituant le bain de fusion.

Selon des modes de réalisation avantageux du procédé selon l'invention :

- les quantités de la ou les sources de sodium et de bore sont introduites dans le mélange de matières premières dans des quantités telles que le ratio $Na_2O/B_2O_3$ est compris entre 1,90 et 2,80 dans ladite composition cible, de préférence entre 2,10 et 2,50, de préférence encore entre 2,10 et 2,40 ou même entre 2,10 et 2,30.
- Une ou la source de bore est choisie parmi un oxyde de bore tel que l'acide borique ou un oxyde mixte de bore avec au moins un élément choisi dans le groupe constitué par Si, Mg, Ca, Na en particulier un oxyde choisi dans le groupe constitué par le borax anhydre ou pentahydraté, la colémanite naturelle ou synthétique, l'ulexite éventuellement calcinée, l'hydroboracite, la razorite, la tincal(conite) ou la kernite, et leurs mélanges.
- Une ou la source de bore est le borax pentahydraté.
- Une ou la source d'aluminium est choisie parmi un oxyde mixte d'aluminium avec au moins un élément choisi dans le groupe constitué par Si, Ca, Na, K, en particulier un silicate d'aluminium et d'au moins un élément choisi parmi Ca, Na ou K, ou de l'alumine hydratée $(Al(OH)_3)$ ou calcinée $Al_2O_3$, un feldspath de composition générale $(K,Na)AlSi_3O_8$ ou une phonolite par exemple de composition générale $4SiO_2.Al_2O_3.0,5(Na_2O.K_2O)$ ou une néphéline par exemple de composition générale $4SiO_2.Al_2O_3.0,5(Na_2O.K_2O)$.
- Le mélange de matières premières comprend en outre une source de calcium de préférence choisi dans le groupe constitué par la chaux, par exemple vive ou éteinte, ou du calcaire.
- Le mélange de matières premières ne comprend, outre ledit calcin, que des oxydes, éventuellement sous forme d'hydrates.
- Au moins une partie dudit calcin de verre est issu d'un verre flotté.
- Au moins une partie dudit calcin de verre est issu d'un verre borosilicaté.
- Au moins une partie dudit calcin de verre est issu d'un verre bouteille.

Les exemples qui suivent illustrent les avantages de la présente invention.

Dans ces exemples on compare deux compositions de verre pour des fibres d'isolation.

La composition de verre selon l'exemple 1 est comparative et celle de l'exemple 2 est conforme à la présente invention.

Les formulations cibles sont données dans le tableau 2 qui suit :

[Tableau 2]

| % massique | SiO$_2$ | Al$_2$O$_3$ | Na$_2$O | K$_2$O | CaO | MgO | B$_2$O$_3$ | Fe$_2$O$_3$ | MnO | P$_2$O$_5$ | SO$_3$ |
|---|---|---|---|---|---|---|---|---|---|---|---|
| Exemple 1* | 64,1 | 1,83 | 16.1 | 0,47 | 7,9 | 2,8 | 5,2 | 0,51 | 0,75 | 0,13 | 0,19 |
| Exemple 2** | 63,6 | 1,84 | 15,0 | 0,45 | 7,6 | 3,0 | 6,9 | 0,51 | 0,75 | 0,13 | 0,21 |
| *comparatif **selon l'invention | | | | | | | | | | | |

Les deux verres sont obtenus à partir des matières premières initiales données dans le tableau 3 qui suit :

[Tableau 3]

| Kilogrammes | Composition exemple 1 | Composition exemple 2 |
|---|---|---|
| Calcin verre flotté | 719 | 827 |

(suite)

| Kilogrammes | Composition exemple 1 | Composition exemple 2 |
|---|---|---|
| Calcin verre bouteille | 124 | 0 |
| Feldspath | 51 | 60 |
| Borax pentahydraté | 106 | 142 |
| Carbonate de sodium | 33 | 0 |
| Phosphate de calcium | 4 | 4 |
| Nitrate de Sodium | 3 | 3 |
| Dioxyde de manganese | 10 | 10 |
| Part de calcin recyclé dans le verre final (% massique) | 84,3 | 82,7 |
| Part de $Na_2O$ apporté par les matières premières carbonatées (% massique) | 1,9 | 0 |

On donne dans le tableau 4 ci-après la composition en oxydes des matières premières utilisées :

[Tableau 4]

| % poids | $SiO_2$ | $Al_2O_3$ | $Na_2O$ | $K_2O$ | CaO | MgO | $B_2O_3$ | $Fe_2O_3$ | MnO | $P_2O_5$ | $SO_3$ |
|---|---|---|---|---|---|---|---|---|---|---|---|
| Calcin verre flotté | 72 | 0,73 | 13,72 | 0,22 | 8,83 | 3,62 | 0 | 0,52 | 0 | 0 | 0,24 |
| Calcin verre bouteille | 71,4 | 1,90 | 12,48 | 0,62 | 10,40 | 1,49 | 0 | 0,45 | 0 | 0 | 0,1 |
| Feldspath | 67 | 19,53 | 7,16 | 4,52 | 0,85 | 0,33 | 0 | 0,11 | 0 | 0 | 0 |
| Borax pentahydraté | 0 | 0 | 21,5 | 0 | 0 | 0 | 48,7 | 0 | 0 | 0 | 0 |
| Carbonate de sodium | 0 | 0 | 58,48 | 0 | 0 | 0 | 0 | 0 | 0 | 0 | 0 |
| Phosphate de calcium | 1 | 0,1 | 0,7 | 0,05 | 52,5 | 0,35 | 0 | 0,1 | | 31,5 | 1,8 |
| Nitrate de Sodium | 0 | 0 | 39,23 | 0 | 0 | 0 | 0 | 0 | 0 | 0 | 0 |
| Dioxyde de manganèse | 4,56 | 7,02 | 0 | 0 | 0,06 | 0,07 | 0 | 6,7 | 74,7 | 0 | 0 |

On peut montrer que la cible de verre selon l'exemple 1, pour de telles proportions d'utilisation de verre flotté ou de bouteille dans la recette initiale de matières premières, ne peut pas être obtenue sans l'ajout d'une quantité sensible de carbonate de sodium, les calcins de verre plats ou de bouteille contenant significativement moins de sodium en fraction massique que la cible typique d'un verre d'isolation. Au contraire, la cible de verre ajustée selon l'invention peut être obtenue sans l'utilisation d'un porteur spécifique de sodium.

Les propriétés des deux verres sont données dans le tableau 5 ci-après :

[Tableau 5]

| °C | $T_{liq}$ | $T_{Log3}$ | $\Delta T = T_{Log3} - T_{liq}$ |
|---|---|---|---|
| Exemple 1 | 914 | 1044 | 130 |
| Exemple 2 | 919 | 1040 | 121 |

On peut voir que la composition de verre selon l'invention répond à tous les principes mentionnés ci-dessus. Le verre ajusté présente avantageusement :

-    des valeurs de $T_{log3}$ et $T_{liq}$ proches des valeurs du verre comparatif (avec une différence inférieure ou égale à 5 °C), ce qui assure toute la sécurité nécessaire dans le procédé de fibrage, la différence entre les deux valeurs restant supérieure à 120°C .
-    la quantité d'alumine est maintenue à une valeur proche de 2% massique, ce qui garantit la biosolubilité des fibres produites.

En outre, la quantité de bore plus élevée permet d'augmenter la capacité du produit final à diffuser la lumière IR et par conséquent ses propriétés d'isolation thermique.

Au final la composition pour fibres de verre d'isolation et le procédé d'obtention de celles-ci permettent tout à la fois :

- d'utiliser dans la recette initiale des matières premières des quantités très importantes de calcin de verre de composition différente, en particulier de calcin de verre flotté, de verre borosilicaté ou encore de verre bouteille,
- de minimiser, la quantité de la source de sodium, en particulier sous forme de carbonate, dans la recette initiale et nécessaire pour une telle proportion de calcin de verre, - de maintenir la bonne viscosité du verre à la température de fibrage, - de maintenir une température de liquidus suffisamment basse pour permettre un tel fibrage sans difficulté accrue,
- de conserver les propriétés de biosolubilité de la laine de verre produite selon les normes actuelles, - voire d'améliorer la diffusion de la lumière par les fibres de verre (par exemple en augmentant la teneur en bore).

Selon d'autres avantages liés à des modes de réalisation particuliers de l'invention, des supports de bore et d'alumine sans carbonate sont choisis pour introduire une quantité maximale de sodium, tels que le borax pentahydraté (au lieu de l'acide borique) et/ou le feldspath sodique (au lieu du feldspath potassique et/ou du feldspath mixte).

**Revendications**

1. Composition de verre pour fibre d'isolation comprenant, en pourcentages massiques:

    $SiO_2$ : entre 62,0% et 65,0%,
    $Na_2O$: entre 14,0 et 15,5%,
    CaO: entre 6,0 et 9,0%,
    MgO : entre 1,5 et 4,0%,
    $B_2O_3$ : entre 5,5 et 7,5%,
    $Al_2O_3$ : entre 1,5 et 2,5%,
    $K_2O$ : entre 0 et 2,0%,
    autre (s) oxyde (s) : entre 0 et 5,0 % poids en cumulé, de préférence entre 0 et 2,0% en cumulé,
    dans lequel le ratio $Na_2O/B_2O_3$ est compris entre 1,90 et 2,80.

2. Composition de verre selon la revendication précédente dans laquelle le ratio $Na_2O/B_2O_3$ est compris entre 2,10 et 2,50, de préférence entre 2,10 et 2,40.

3. Composition de verre selon l'une des revendications précédentes dans laquelle le pourcentage massique en $Na_2O$ est compris entre 14,5 et 15,5%.

4. Composition de verre selon l'une des revendications précédentes dans laquelle le pourcentage massique en $B_2O_3$ est compris entre 6,5 et 8,0%, de préférence encore entre 6,7 et 7,5%.

5. Composition de verre selon l'une des revendications précédentes dans laquelle le pourcentage massique en $Al_2O_3$ est compris entre 1,6 et 2,0%.

6. Composition de verre selon l'une des revendications précédentes dans laquelle le pourcentage massique en $SiO_2$ est compris entre 63,0 et 64,0%.

7. Composition de verre selon l'une des revendications précédentes dans laquelle le pourcentage massique en MgO est compris entre 2,5 et 3,5%.

8. Composition de verre selon l'une des revendications précédentes dans laquelle le pourcentage massique en CaO est compris entre 8,0 et 9,0%.

9. Composition de verre selon l'une des revendications précédentes présentant une valeur $T_{log3}$ comprise entre 1030 et 1080°C, $T_{log3}$ étant la température correspondant à une viscosité de $10^3$ poises de la composition fondue.

10. Composition de verre selon l'une des revendications précédentes présentant une valeur $T_{liq}$ inférieure à 925°C, de préférence inférieure à 920°C, $T_{liq}$ étant la température en dessous de laquelle se forment les premiers cristaux lors du refroidissement de la composition fondue.

**11.** Composition de verre selon l'une des revendications précédentes présentant une différence $\Delta T$ entre ses valeurs $T_{log3}$ et $T_{liq}$ supérieure à 100°C, de préférence supérieure à 110°C.

**12.** Fibres de verre pour isolation répondant à la composition selon l'une des revendications précédentes.

**13.** Matelas de fibres de verre comprenant un ensemble de fibres de verre selon la revendication précédente, liées par un liant organique ou inorganique.

**14.** Procédé de fabrication de fibres de verre selon la revendication 12, présentant la composition selon l'une des revendications 1 à 11, comprenant la fusion d'un mélange de matières premières constituant un bain de fusion et le fibrage dudit mélange fondu,

    ledit bain de fusion comprenant:

        - du calcin de verre comprenant un pourcentage poids de silice supérieur à 70%, de préférence supérieur à 71%,

            - au moins une source d'aluminium,
            - au moins une source de bore,
            - optionnellement au moins une source de magnésium,

        - optionnellement au moins une source de sodium choisie parmi l'hydroxyde de sodium NaOH, le silicate de sodium, le nitrate de sodium ou leur mélange;

            - optionnellement au moins une source de calcium,

        - optionnellement des sources d'au moins un élément choisi parmi le phosphore P, le manganèse Mn, le fer Fe, le fluor F,

    dans lequel ledit calcin de verre représente, en masse, plus de 70%, de préférence plus de 75%, du verre fondu obtenu à partir du mélange de matières premières constituant le bain de fusion.

**15.** Procédé de fabrication de fibres de verre selon la revendication précédente, dans lequel les quantités de la ou les sources de sodium et de bore sont introduites dans le mélange de matières premières dans des quantités telles que le ratio $Na_2O/B_2O_3$ est compris entre 1,90 et 2,80 dans ladite composition cible, de préférence entre 2,10 et 2,50, de préférence encore entre 2,10 et 2,40.

**16.** Procédé de fabrication de fibres de verre selon l'une des revendications 14 ou 15, dans lequel une source de bore est choisie parmi un oxyde de bore tel que l'acide borique ou un oxyde mixte de bore avec au moins un élément choisi dans le groupe constitué par Si, Mg, Ca, Na en particulier un oxyde choisi dans le groupe constitué par le borax anhydre ou pentahydraté, la colémanite naturelle ou synthétique, l'ulexite éventuellement calcinée, l'hydroboracite, la razorite, la tincal(conite) ou la kernite, et leurs mélanges.

**17.** Procédé de fabrication de fibres de verre selon l'une des revendications 14 à 16, dans lequel une source de bore est le borax pentahydraté.

**18.** Procédé de fabrication de fibres de verre selon l'une des revendications 14 à 17, dans lequel la source d'aluminium est choisie parmi un oxyde mixte d'aluminium avec au moins un élément choisi dans le groupe constitué par Si, Ca, Na, K, en particulier un silicate d'aluminium et d'au moins un élément choisi parmi Ca, Na ou K, ou de l'alumine hydratée $(Al(OH)_3)$ ou calcinée $Al_2O_3$, un feldspath de composition générale $(K,Na)AlSi_3O_8$ ou une phonolite par exemple de composition générale $4SiO_2.Al_2O_3.0,5(Na_2O.K_2O)$ ou une néphéline par exemple de composition générale $4SiO_2.Al_2O_3.0,5(Na_2O.K_2O)$.

**19.** Procédé de fabrication de fibres de verre selon l'une des revendications 14 à 18, dans lequel le mélange de matières premières comprend en outre une source de calcium de préférence choisi dans le groupe constitué par la chaux, par exemple vive ou éteinte, ou du calcaire.

20. Procédé de fabrication de fibres de verre selon l'une des revendications 14 à 19, dans lequel le mélange de matières premières ne comprend, outre ledit calcin, que des oxydes, éventuellement sous forme d'hydrates.

21. Procédé de fabrication de fibres de verre selon l'une des revendications 14 à 20, dans lequel au moins une partie dudit calcin de verre est issue d'un verre flotté.

22. Procédé de fabrication de fibres de verre selon l'une des revendications 14 à 21, dans lequel au moins une partie dudit calcin de verre est issue d'un verre borosilicaté.

23. Procédé de fabrication de fibres de verre selon l'une des revendications 14 à 22, dans lequel au moins une partie dudit calcin de verre est issue d'un verre bouteille.

Europäisches Patentamt
European Patent Office
Office européen des brevets

**RAPPORT DE RECHERCHE EUROPEENNE**

Numéro de la demande

EP 25 21 6078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 103 103 695 A (CHENGDU HANJIANG NEW BUILDING MATERIAL CO LTD) 15 mai 2013 (2013-05-15) * alinéas [0083] - [0084]; revendication 1 * | 1-23 | INV. C03C1/00 C03C3/064 C03C3/087 C03C3/091 C03C3/097 C03C13/04 |
| | ----- | | |
| X | EP 0 412 878 A1 (SAINT GOBAIN ISOVER [FR]) 13 février 1991 (1991-02-13) * revendication 6; exemple 10 * | 1-23 | |
| | ----- | | |
| X | WO 2014/171561 A1 (KCC CORP [KR]) 23 octobre 2014 (2014-10-23) * revendications 8,9; exemples 1,5 * | 1-23 | |
| | ----- | | |
| X | CN 103 058 526 A (CHENGDU HANJIANG NEW BUILDING MATERIAL CO LTD) 24 avril 2013 (2013-04-24) * revendications 1,8; exemple 2 * | 1-23 | |
| | ----- | | |
| X | US 2019/249817 A1 (ENDO SHINJI [JP]) 15 août 2019 (2019-08-15) * revendications 1,2 * | 1-23 | |
| | ----- | | |

**DOMAINES TECHNIQUES RECHERCHES (IPC)**

C03C

Le présent rapport a été établi pour toutes les revendications

| Lieu de la recherche | Date d'achèvement de la recherche | Examinateur |
|---|---|---|
| Munich | 24 mars 2026 | Saldamli, Saltuk |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 748 806 A1**

## ANNEXE AU RAPPORT DE RECHERCHE EUROPEENNE
## RELATIF A LA DEMANDE DE BREVET EUROPEEN NO.

EP 25 21 6078

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-03-2026

| Document brevet cité au rapport de recherche | | Date de publication | Membre(s) de la famille de brevet(s) | | Date de publication |
|---|---|---|---|---|---|
| CN 103103695 | A | 15-05-2013 | AUCUN | | |
| EP 0412878 | A1 | 13-02-1991 | AT | E102902 T1 | 15-04-1994 |
| | | | AU | 630484 B2 | 29-10-1992 |
| | | | BR | 9003934 A | 03-09-1991 |
| | | | CA | 2022446 A1 | 12-02-1991 |
| | | | CN | 1049834 A | 13-03-1991 |
| | | | CN | 1093066 A | 05-10-1994 |
| | | | CZ | 285303 B6 | 14-07-1999 |
| | | | DE | 69007369 T2 | 13-10-1994 |
| | | | DK | 0412878 T3 | 18-07-1994 |
| | | | EP | 0412878 A1 | 13-02-1991 |
| | | | ES | 2053139 T3 | 16-07-1994 |
| | | | HU | 210633 B | 28-06-1995 |
| | | | IE | 902834 A1 | 27-02-1991 |
| | | | JP | 3192652 B2 | 30-07-2001 |
| | | | JP | H0393650 A | 18-04-1991 |
| | | | KR | 910004492 A | 28-03-1991 |
| | | | MX | 172027 B | 29-11-1993 |
| | | | NO | 178023 B | 02-10-1995 |
| | | | NZ | 234718 A | 26-05-1992 |
| | | | PL | 171355 B1 | 30-04-1997 |
| | | | PL | 286430 A1 | 22-04-1991 |
| | | | PT | 94971 A | 18-04-1991 |
| | | | SK | 396090 A3 | 08-10-1999 |
| | | | TR | 24496 A | 01-11-1991 |
| | | | US | 5108957 A | 28-04-1992 |
| | | | YU | 154890 A | 28-05-1993 |
| WO 2014171561 | A1 | 23-10-2014 | AUCUN | | |
| CN 103058526 | A | 24-04-2013 | AUCUN | | |
| US 2019249817 | A1 | 15-08-2019 | CA | 3036830 A1 | 22-03-2018 |
| | | | CN | 110023260 A | 16-07-2019 |
| | | | EP | 3546434 A1 | 02-10-2019 |
| | | | JP | 6860582 B2 | 14-04-2021 |
| | | | JP | WO2018052150 A1 | 27-06-2019 |
| | | | KR | 20190055136 A | 22-05-2019 |
| | | | MY | 193093 A | 26-09-2022 |
| | | | SI | 3546434 T1 | 30-04-2024 |
| | | | US | 2019249817 A1 | 15-08-2019 |
| | | | WO | 2018052150 A1 | 22-03-2018 |

EPO FORM P0460

Pour tout renseignement concernant cette annexe : voir Journal Officiel de l'Office européen des brevets, No.12/82